# FASCICULE DE BREVET EUROPEEN

(11) **EP 3 038 101 B1**
(45) Date de publication et mention de la délivrance du brevet: **23.11.2022**
(21) Numéro de dépôt: 14307164.5
(22) Date de dépôt: 23.12.2014
(51) Int. Cl.: G10K 11/172, F02K 1/82, F02C 7/045, F02C 7/18

(54) **Paroi acoustique à échangeur thermique intégré**
Schalldämmwand mit integriertem Wärmetauscher
Acoustic wall with built-in heat exchanger

(43) Date de publication de la demande: 29.06.2016
(73) Titulaire: AIRBUS (SAS), 31700 Blagnac (FR); AIRBUS OPERATIONS (S.A.S), 31060 Toulouse (FR)
(72) Inventeur: Rogero, Jean-Michel, 31300 Toulouse (FR); Roux, Anthony, 31000 Toulouse (FR); Lempereur, Pierre, 31770 Colomiers (FR); Rechain, Bruno, 75015 Paris (FR)
(74) Mandataire: Gicquel, Olivier Yves Gérard

(56) Documents cités:
- EP-A1- 2 604 426
- WO-A1-2007/149535
- WO-A1-2013/050698
- US-A1- 2011 126 544
- US-A1- 2011 303 398

## Description

L'invention se rapporte au domaine général des turbomachines. Elle concerne plus particulièrement les problèmes posés par la mise en place d'échangeurs thermiques au sein des veines d'air des turbomachines en particulier au niveau des parois limitant ces veines d'air. *CONTEXTE DE L'INVENTION - ANTERIEUR*

Les besoins en refroidissement sur les systèmes propulsifs ont un impact important sur les performances des turbomachines. Les radiateurs (par ex. air-huile) sont souvent insérés soit par déroutement, soit de manière intrusive dans des veines d'air afin d'assurer un bon échange thermique par convection. Ceci implique une masse importante du système ainsi que des pertes de charges qui dégradent les performances globales du moteur, et ont un impact sur la consommation.

L'introduction de radiateurs surfaciques dans la nacelle constitue un moyen connu de réduire les pertes aérodynamiques liées à l'installation d'échangeurs thermiques au niveau des veines d'air. En revanche, la mise en place de telles structures au niveau des parois des veines d'air se traduit généralement par une diminution de la surface dévolue au traitement acoustique, diminution qui peut réduire plus ou moins fortement la capacité de ce traitement à atténuer le bruit engendré dans la nacelle.

Le traitement acoustique est en général réalisé en mettant en place un une paroi de revêtement comportant:
- Une première plaque structurale canalisant le flux d'air, présentant des perforations équiréparties sur sa surface et dimensionnées de façon favoriser la propagation de l'onde acoustique à l'intérieur de la paroi;
- Une seconde plaque structurale formant l'arrière de la paroi réalisant le traitement acoustique.
- Un réseau de cavités acoustiques, composé, par exemple, d'une structure en nid d'abeille placée en sandwich entre les deux feuilles, et dont l'épaisseur est calculée de manière à atténuer une gamme de fréquence du spectre acoustique.

Dans une telle paroi de revêtement, les plaques structurales sont généralement réalisées en carbone ou en métal. La structure en nid d'abeille est quant à elle généralement réalisée en métal ou papier d'aramide.

Il est communément admis qu'une solution pour limiter les perturbations aérodynamiques du flux d'air occasionnées par la mise en place de dispositifs d'échanges thermiques consiste à intégrer lesdits échangeurs à la paroi de revêtement réalisant le traitement acoustique.

Plusieurs types d'échangeurs thermiques peuvent à cet effet être utilisés pour être assemblés au traitement acoustique.

Le document EP 2 604 426 décrit des alvéoles formées par une plaque déformée et dont les parois ne sont pas jointives sur une partie de leur hauteur. Ces alvéoles déterminent par les faces externes de leurs parois, avec un revêtement rapporté, un espace de circulation d'air chaud.

Le document WO2013/050698 divulgue un panneau acoustique comportant une structure en nid d'abeilles. Des canaux de circulation sont ménagés entre les cellules de la structure en nid d'abeilles.

Le document US2011/0303398 décrit un radiateur comportant une structure acoustique alvéolaire sur laquelle est superposé un caisson dans lequel circule l'huile à refroidir.

Le document US2011/0126544 divulgue une paroi traitée acoustiquement et dont la face réflectrice comporte un caisson de circulation d'un fluide chaud pour réchauffer la paroi.

Cependant, les diverses solutions de l'état actuel de la technique ont généralement pour effet d'altérer le traitement acoustique de sorte qu'une turbomachine équipée de tels échangeurs thermiques présente un niveau d'émissions sonores supérieur à celui d'une turbomachine classique. *PRESENTATION DE L'INVENTION*

Un but de l'invention est de proposer une solution permettant d'intégrer des échangeurs thermique à la paroi de revêtement réalisant un traitement acoustique telle que celle décrite précédemment et ne présentant les inconvénients des solutions connues en termes de dégradation de la qualité du traitement acoustique réalisé.

Un autre but de l'invention est de proposer une solution simple à réaliser.

A cet effet l'invention a pour objet un dispositif d'atténuation d'ondes acoustiques selon la revendication 1.

Selon un mode de réalisation de l'invention le diamètre et la forme des perforations sont définis de façon à favoriser la propagation des ondes sonores à travers la paroi interne.

Selon un autre mode de réalisation, les perforations, les orifices, sont agencés à la surface de la paroi interne de façon à favoriser la propagation des ondes sonores au travers du filtre acoustique.

Selon un autre mode de réalisation, les canalisations sont agencées entre les perforations de la paroi interne de telle façon que leur arrangement ne perturbe pas sensiblement les caractéristiques du filtre acoustique.

Selon une variante de réalisation, les canalisations sont fixées sur la face de la paroi interne en contact avec la structure constituant le filtre acoustique.

Selon une variante de réalisation, des sillons sont ménagés dans l'épaisseur de la paroi interne, du côté de sa face interne.

Selon une caractéristique de cette variante, les canalisations sont insérées dans les sillons.

Selon une autre variante de réalisation, les canalisations sont réalisées dans l'épaisseur de la paroi interne.

Selon un autre mode de réalisation, les cellules de la structure constituant un filtre acoustique sont dimensionnées de façon à constituer des résonateurs quart d'onde pour les fréquences des ondes sonores à filtrer.

Selon une variante de réalisation, la structure formant un filtre acoustique est une structure alvéolaire en forme de nid d'abeille dont les cellules hexagonales sont orientées sensiblement perpendiculairement aux surfaces des première et seconde parois.

Selon une autre variante de réalisation les canalisations sont configurées et agencées de façon à suivre les contours définis par les parois des cellules de la structure formant un filtre acoustique.

Les caractéristiques et avantages de l'invention seront mieux appréciés grâce à la description qui suit, description qui s'appuie sur les figures annexées qui présentent:
- la figure1, une vue schématique en coupe partielle, d'un exemple de réalisation du dispositif selon l'invention,
- la figure 2, une vue schématique plane, en coupe, d'une variante de réalisation du dispositif tel qu'illustré par la figure 1 ;
- la figure 3, une vue schématique partielle de l'exemple de réalisation de la figure 1, dans le plan limité par la face interne de la paroi à laquelle il est intégré;
- la figure 4, une vue schématique partielle de l'exemple de réalisation de la figure 1 dans le plan limité par la face externe de la paroi à laquelle il est intégré; *DESCRIPTION DETAILLEE*

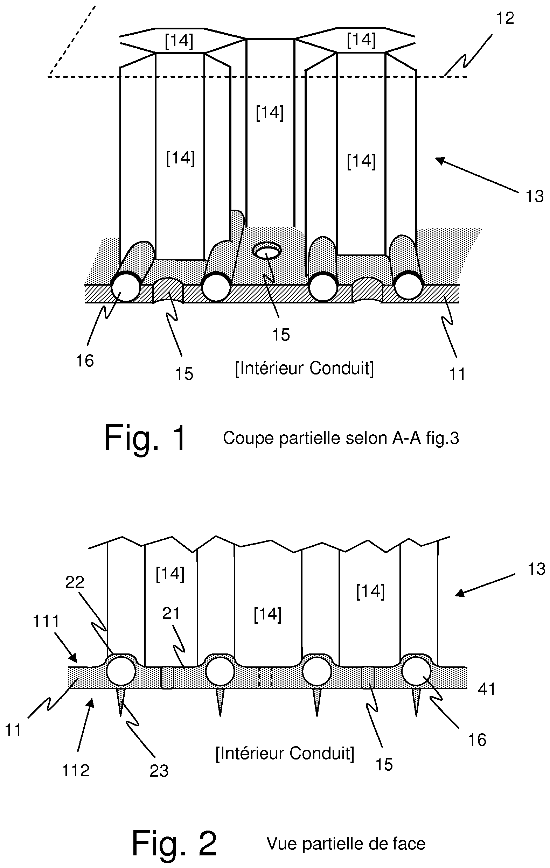

Pour des raisons de clarté, la suite de la description décrit les différentes caractéristiques du dispositif selon l'invention, au travers d'un exemple particulier de réalisation, illustré par les figures 1 à 4. La présentation du dispositif selon l'invention à travers de ce mode de réalisation n'a cependant pas pour objet d'en limiter la portée ou l'étendue d'une quelconque façon.

Comme l'illustrent les figures annexées, le dispositif selon l'invention comporte principalement une paroi interne 11 qui constitue la paroi interne du conduit auquel il est intégré, et une paroi externe 12 qui constitue la paroi externe dudit conduit. Sur la figure 1, la paroi externe 12 est figurée de manière schématique par un trait pointillé.

La paroi interne 11 est en contact par une de ses faces avec le flux d'air circulant dans le conduit, tandis que la paroi externe est par exemple en contact, par une de ses faces avec l'environnement extérieur au conduit.

Le dispositif selon l'invention comporte également un élément intermédiaire 13 disposé entre les faces des parois interne 11 et externe 12 en regard l'une de l'autre, dont la structure et l'agencement sont déterminés de façon à constituer un dispositif de filtrage des ondes sonores se propageant dans le conduit, ondes sonores portées par le flux d'air circulant dans ce dernier.

Selon le mode de réalisation considéré, il est possible de mettre en place des structures acoustiques absorbantes présentant une organisation diversifiée.

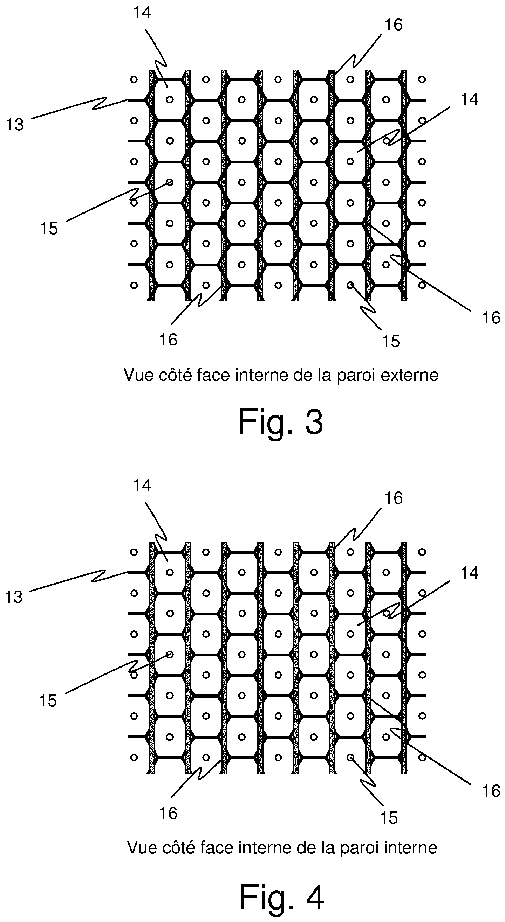

Dans l'exemple de réalisation présenté, l'élément intermédiaire 13 est une structure acoustique absorbante formée d'une juxtaposition de cellules résonantes 14 dimensionnées de façon à constituer des résonateurs ¼ d'onde. A cet effet les cellules 14 présentent une forme appropriée, la forme d'une cavité de section hexagonale par exemple. Elles sont en outre agencées de façon à constituer une structure de préférence régulière, une structure en nid d'abeille telle que celle illustrée par les figures 3 et 4 pour l'exemple de réalisation considéré.

Ladite structure forme un filtre acoustique qui est placé entre les parois interne 11 et externe 12, par exemple de façon à ce que les axes des cavités soient disposés perpendiculairement aux faces internes et externes, comme illustré par la figure1.

Des structures absorbantes avec des organisations différentes de celle de la structure en nid d'abeille et/ou des orientations différentes que perpendiculaire sont bien entendu alternativement possibles.

Selon l'invention, la paroi interne 11 du dispositif est percée d'orifices 15 disposés de façon à faire communiquer l'intérieur du conduit avec chacune des cellules résonantes constituant le filtre acoustique. Le taux de perforation, autrement dit le rapport surface de trous / surface totale définit la performance acoustique du système, tandis que le diamètre et la forme des trous définit l'impact en trainée du même système.

Les orifices sont préférentiellement agencés et configurés de façon à ce que chacune des cellules communique par au moins un orifice avec l'intérieur du conduit. Par ailleurs les orifices ainsi ménagés peuvent présenter des sections de formes diverses, une section ronde ou oblongue par exemple.

Dans une forme de réalisation préférée, le diamètre d'un orifice 15 est dimensionné de façon à ce qu'une onde sonore se propageant dans le conduit se propage également dans la cellule correspondante sous la forme d'une onde plane.

Le dispositif selon l'invention comporte également, sur tout ou partie de sa surface, un réseau de canalisations 16 solidaires de la face interne 11 du dispositif. Ces canalisations 16 sont des canalisations préférentiellement parallèles, agencées de telle façon que leurs trajets ne croisent pas les emplacements des orifices 15 faisant communiquer l'intérieur du conduit avec les différentes cellules 14. A cet effet, les orifices 15 peuvent, quant à eux, ne pas être régulièrement reparties sur toute la surface, mais former des zones à une forte densité de petits trous entre les canalisations et des zones non perforées au niveau des canalisations.

Lesdites canalisations 16 sont par ailleurs agencées à la surface de la face interne de façon à perturber le moins possible les propriétés de résonance des cellules formant le filtre acoustique 13. Les canalisations 16 sont configurées et agencées de telle façon à se situer au niveau ou au moins au voisinage des parois des cellules, comme illustré par les figures 3 et 4 en particulier.

Les canalisations 16 constituent avec la paroi interne 11 à laquelle elles sont fixées, un système d'échange thermique. Elles sont destinées à transporter le fluide caloporteur de l'échangeur thermique servant à refroidir un équipement, le fluide chaud transporté par les canalisations 16 dissipant de la chaleur par convection avec l'air circulant dans le conduit par l'intermédiaire de la paroi interne 11 du dispositif.

On dispose ainsi avantageusement d'une structure bivalente formant à la fois un dispositif de filtrage acoustique et un échangeur thermique.

Selon l'invention les canalisations fixées à la paroi interne 11 du dispositif peuvent présenter un diamètre relativement faible par rapport à l'épaisseur de la structure en nid d'abeille constituant le filtre acoustique. Selon le mode de réalisation considéré, les canalisations 16 sont associées au dispositif acoustique de différentes façons.

Selon un mode de réalisation simple, les canalisations 16 sont des tubes fixés sur la face interne de la paroi interne 11 du dispositif, c'est-à-dire la face en contact avec l'élément 13 constituant le filtre acoustique, la structure en nid d'abeille dans le cas du mode de réalisation pris comme exemple. La fixation peut être réalisée par tout moyen connu approprié en fonction des matériaux dans lesquels les tubes 16 et la paroi interne 11 sont réalisés. Ces canalisations sont assemblées par soudure ou brasure à la paroi interne ainsi qu'à la base de la structure d'abeille.

Alternativement, les canalisations 16 peuvent être insérées dans des sillons ou cannelures ménagées dans l'épaisseur de la paroi interne 11, préférentiellement du côté de la face interne, comme illustré par la figure 1.

Alternativement encore, les canalisations 16 peuvent être formées, par exemple par usinage ou moulage, dans l'épaisseur même de la paroi interne 11 dont elles font alors partie intégrante, comme illustré par la figure 2.

Il est à noter que la paroi interne 11 du dispositif présente une épaisseur hors tout variable, avec des zones 21 de faible épaisseur (typiquement l'épaisseur de la plaque de matériau formant la paroi elle-même) notamment aux endroits en regard des cavités des cellules 14 et aux endroits des orifices 15, et des zones 22 de plus forte épaisseur, aux endroits où sont situées les canalisations 16, du fait de l'épaisseur même de ces dernières. La paroi interne 11 présente ainsi sur sa face interne un certain relief. En revanche, pour des raisons d'aérodynamisme, la face externe de la paroi interne 11 reste préférablement sans relief.

Du fait de la présence de ces reliefs sur la face interne 111 de la paroi interne 11 du dispositif, la base de l'élément 13 formant le filtre acoustique du dispositif selon l'invention qui est en contact avec la paroi interne 11 est aménagée de façon à rester en contact avec ladite paroi sur toute sa surface en épousant le relief de la face interne 111. Ainsi dans l'exemple illustré par les figures 1 et 2, les bases des cellules 14 de section hexagonale formant le filtre acoustique en nid d'abeille 13 présentent des découpes permettant à la base des cellules de s'adapter au relief de la face 111 sur laquelle elles reposent.

Il est à noter également qu'une telle structure permet avantageusement de conserver, au niveau des cellules formant le filtre acoustique, une paroi interne 11 présentant une faible épaisseur, de façon à perturber le moins possible le front d'une onde acoustique traversant une perforation 15 et pénétrant dans une cellule acoustique 14

En complément du jeu de canalisations 16 décrit dans les paragraphes précédents, le dispositif selon l'invention peut en outre, dans une forme de réalisation particulière, comporter des éléments dissipateurs agencés sur la face externe 112 de la paroi interne 11, c'est-à-dire sur la face en contact avec le flux d'air. La présence de ces éléments dissipateurs augmente l'échange thermique entre le fluide contenu dans les canalisations 16 et le flux d'air traversant le conduit, par convexion via la paroi interne 11 du dispositif. Ces éléments dissipateurs peuvent prendre par exemple la forme d'ailettes 23, comme illustré par la figure 2, disposées dans le sens d'écoulement du flux d'air.

Comme il ressort de la description qui précède, le dispositif selon l'invention permet avantageusement de créer des cloisons de conduits capables à la fois de filtrer efficacement les bruits acoustiques portés par le flux d'air traversant ledit conduit et de former une zone d'échange thermique avec le flux d'air traversant le conduit, cette zone constituant un échangeur qui peut être mise à profit de différentes façons. Ainsi dans le contexte d'un aéronef, le conduit considéré peut par exemple consister en la veine secondaire d'un réacteur double flux, ou turbofan selon la dénomination anglo-saxonne. Dans ce cas la zone d'échange thermique dont est pourvu le dispositif selon l'invention permet notamment, sans altérer sensiblement les propriétés acoustiques du dispositif:
- de refroidir l'huile d'un moteur ou d'un réducteur par échange thermique avec le flux secondaire d'un turbofan de façon non-intrusive ou peu intrusive;
- de refroidir un fluide caloporteur issu d'autres sources chaudes de façon non-intrusive ou peu intrusive;
- d'assurer une fonction de dégivrage de la paroi de l'aéronef;
- d'augmenter la température du flux principal affleurant le dispositif.

## Revendications

1. Dispositif d'atténuation d'ondes acoustiques, formant une paroi d'un conduit, lesdites ondes acoustiques se propageant dans un flux d'air traversant ledit conduit, ledit dispositif comportant une structure (13) pourvue de cellules (14) constituant un filtre acoustique, limitée par une première paroi (11) ajourée formant la paroi interne du conduit et par une seconde paroi (12) pleine formant la paroi externe du conduit, ladite paroi interne (11) présentant des perforations (15) faisant communiquer les cellules (14) avec l'intérieur du conduit, et comportant des canalisations (16) de transport d'un fluide caloporteur placées sur une face interne (111) de la paroi interne (11) et/ou partiellement intégrées dans ladite paroi interne (11), lesdites canalisations (16) étant sensiblement parallèles entre elles, chaque canalisation ne croisant pas les emplacements des perforations (15), et étant agencée de façon à se situer au niveau ou au voisinage des parois des cellules (14), **caractérisé en ce que** la base de la structure (13) est aménagée de façon à rester en contact avec ladite paroi sur toute sa surface en épousant le relief de la face interne (111) de façon à permettre un échange thermique, au travers de la paroi interne (11), entre le fluide caloporteur et le flux d'air circulant dans le conduit.

2. Dispositif selon la revendication 1, **caractérisé en ce que** le diamètre et la forme des perforations (15) sont définis de façon à favoriser la propagation des ondes sonores à travers la paroi interne (11).

3. Dispositif selon l'une des revendications 1 ou 2, **caractérisé en ce que** les perforations (15) sont agencés à la surface de la paroi interne (11) de façon à favoriser la propagation des ondes sonores au travers du filtre acoustique.

4. Dispositif selon l'une des revendications 1 à 3, **caractérisé en ce que** les canalisations (16) sont agencées entre les perforations (15) de la paroi interne (11) de telle façon que leur arrangement ne perturbe pas sensiblement les caractéristiques du filtre acoustique (13).

5. Dispositif selon l'une quelconque des revendications 1 à 4, **caractérisé en ce que** les canalisations (16) sont fixées sur la face (111) de la paroi interne (11) en contact avec la structure constituant le filtre acoustique (13).

6. Dispositif selon l'une quelconque des revendications 1 à 4, **caractérisé en ce que** les canalisations (16) sont réalisées dans l'épaisseur de la paroi interne (11).

7. Dispositif selon la revendication 6, **caractérisé en ce que** la paroi interne (11) présente une épaisseur variable, l'épaisseur de ladite paroi étant minimale au niveau des perforations (15).

8. Dispositif selon l'une quelconque des revendications précédentes, **caractérisé en ce que** les cellules (14) de la structure (13) constituant un filtre acoustique sont dimensionnées de façon à constituer des résonateurs quart d'onde pour les fréquences des ondes sonores à filtrer.

9. Dispositif selon la revendication 8, **caractérisé en ce que** la structure formant un filtre acoustique (13) est une structure alvéolaire en forme de nid d'abeille dont les cellules hexagonales (14) sont orientées sensiblement perpendiculairement aux surfaces des première (11) et seconde (12) parois.

10. Dispositif selon la revendication 9, **caractérisé en ce que** les canalisations (16) sont configurées et agencées de façon à suivre les contours définis par les parois des cellules (14) de la structure (13) formant un filtre acoustique.

## Patentansprüche

1. Vorrichtung zur Dämpfung von Schallwellen, die eine Wand eines Kanals bildet, wobei sich die Schallwellen in einem Luftstrom ausbreiten, der den Kanal durchquert, wobei die Vorrichtung eine Struktur (13) umfasst, die mit Zellen (14) versehen ist, die einen akustischen Filter bilden, der durch eine erste durchbrochene Wand (11), die die Innenwand des Kanals bildet, und durch eine zweite massive Wand (12), die die Außenwand des Kanals bildet, begrenzt ist, wobei die Innenwand (11) Perforationen (15) aufweist, die die Zellen (14) mit dem Inneren des Kanals verbinden, und Leitungen (16) zum Transport eines Wärmeträgerfluids umfasst, die auf einer Innenseite (111) der Innenwand (11) angeordnet und/oder teilweise in die Innenwand (11) integriert sind, wobei die Leitungen (16) im Wesentlichen parallel zueinander verlaufen, wobei jede Leitung die Stellen der Perforationen (15) nicht kreuzt, und so angeordnet ist, dass sie sich auf der Höhe oder in der Nähe der Wände der Zellen (14) befinden, **dadurch gekennzeichnet, dass** die Basis der Struktur (13) so eingerichtet ist, dass sie auf ihrer gesamten Oberfläche in Kontakt mit der Wand bleibt, indem sie sich dem Relief der Innenseite (111) anpasst, um einen Wärmeaustausch durch die Innenwand (11) zwischen dem Wärmeträgerfluid und dem in der Leitung zirkulierenden Luftstrom zu ermöglichen.

2. Vorrichtung nach Anspruch 1, **dadurch gekennzeichnet, dass** der Durchmesser und die Form der Perforationen (15) so definiert sind, dass sie die Ausbreitung von Schallwellen durch die Innenwand (11) begünstigen.

3. Vorrichtung nach einem der Ansprüche 1 oder 2, **dadurch gekennzeichnet, dass** die Perforationen (15) auf der Oberfläche der Innenwand (11) so angeordnet sind, dass sie die Ausbreitung der Schallwellen durch den akustischen Filter begünstigen.

4. Vorrichtung nach einem der Ansprüche 1 bis 3, **dadurch gekennzeichnet, dass** die Leitungen (16) zwischen den Perforationen (15) der Innenwand (11) so angeordnet sind, dass ihre Anordnung die Eigenschaften des akustischen Filters (13) nicht wesentlich beeinträchtigt.

5. Vorrichtung nach einem der Ansprüche 1 bis 4, **dadurch gekennzeichnet, dass** die Leitungen (16) an der Seite (111) der Innenwand (11) befestigt sind, die in Kontakt mit der Struktur steht, die den akustischen Filter (13) bildet.

6. Vorrichtung nach einem der Ansprüche 1 bis 4, **dadurch gekennzeichnet, dass** die Leitungen (16) in der Dicke der Innenwand (11) ausgeführt sind.

7. Vorrichtung nach Anspruch 6, **dadurch gekennzeichnet, dass** die Innenwand (11) eine variable Dicke aufweist, wobei die Dicke der Wand im Bereich der Perforationen (15) minimal ist.

8. Vorrichtung nach einem der vorhergehenden Ansprüche, **dadurch gekennzeichnet, dass** die Zellen (14) der Struktur (13), die einen akustischen Filter bilden, so dimensioniert sind, dass sie Viertel-Wellen-Resonatoren für die Frequenzen der zu filternden Schallwellen bilden.

9. Vorrichtung nach Anspruch 8, **dadurch gekennzeichnet, dass** die einen akustischen Filter bildende Struktur (13) eine wabenförmige Wabenstruktur ist, deren sechseckige Zellen (14) im Wesentlichen senkrecht zu den Oberflächen der ersten (11) und zweiten (12) Wand ausgerichtet sind.

10. Vorrichtung nach Anspruch 9, **dadurch gekennzeichnet, dass** die Kanäle (16) so konfiguriert und angeordnet sind, dass sie den Konturen folgen, die von den Wänden der Zellen (14) der Struktur (13) definiert werden, die einen akustischen Filter bilden.

## Claims

1. Acoustic wave attenuation device, forming a wall of a duct, said acoustic waves propagating in a flow of air passing through said duct, said device having a structure (13) provided with cells (14) constituting an acoustic filter, limited by a first, perforated wall (11) forming the inner wall of the duct and by a second, solid wall (12) forming the outer wall of the duct, said inner wall (11) having perforations (15) placing the cells (14) in communication with the inside of the duct, and having pipes (16) for transporting a heat transfer fluid that are placed on an inner face (111) of the inner wall (11) and/or partially incorporated in said inner wall (11), said pipes (16) being substantially parallel to one another, each pipe not intersecting the locations of the perforations (15), and being arranged so as to be located on or in the vicinity of the walls of the cells (14), **characterized in that** the base of the structure (13) is made so as to remain in contact with said wall over all its surface area by closely following the relief of the inner face (111) so as to allow the exchange of heat, through the inner wall (11), between the heat transfer fluid and the flow of air circulating in the duct.

2. Device according to Claim 1, **characterized in that** the diameter and the shape of the perforations (15) are defined to as to promote the propagation of sound waves through the inner wall (11).

3. Device according to either of Claims 1 and 2, **characterized in that** the perforations (15) are arranged on the surface of the inner wall (11) so as to promote the propagation of sound waves through the acoustic filter.

4. Device according to one of Claims 1 to 3, **characterized in that** the pipes (16) are arranged between the perforations (15) in the inner wall (11) such that their arrangement does not substantially interfere with the characteristics of the acoustic filter (13).

5. Device according to one of Claims 1 to 4, **characterized in that** the pipes (16) are fixed to the face (111) of the inner wall (11) that is in contact with the structure constituting the acoustic filter (13).

6. Device according to one of Claims 1 to 4, **characterized in that** the pipes (16) are made in the thickness of the inner wall (11).

7. Device according to Claim 6, **characterized in that** the inner wall (11) has a variable thickness, the thickness of said wall being at a minimum at the perforations (15).

8. Device according to any one of the preceding claims, **characterized in that** the cells (14) of the structure (13) constituting an acoustic filter are dimensioned so as to constitute quarter wave resonators for the frequencies of the sound waves to be filtered.

9. Device according to Claim 8, **characterized in that** the structure (13) forming an acoustic filter is an alveolar structure in the form of a honeycomb with hexagonal cells (14) oriented substantially perpendicularly to the surfaces of the first wall (11) and second wall (12).

10. Device according to Claim 9, **characterized in that** the pipes (16) are configured and arranged so as to follow the contours defined by the walls of the cells (14) of the structure (13) forming an acoustic filter.
